# DEMANDE DE BREVET EUROPEEN

(11) **EP 4 530 140 A1**
(43) Date de publication de la demande: **02.04.2025**
(21) Numéro de dépôt: 24202784.5
(22) Date de dépôt: 26.09.2024
(51) Int. Cl.: B60T 13/66, B60T 17/22

(54) **VÉHICULE FERROVIAIRE À FREIN ÉLECTROPNEUMATIQUE ÉQUIPÉ D'UN DISPOSITIF PORTABLE DE SECOURS EN CAS D'AVARIE ÉLECTRIQUE**

(30) Priorité: 26.09.2023 FR 2310191
(71) Demandeur: ALSTOM Holdings, 93400 Saint-Ouen-sur-Seine (FR)
(72) Inventeur: BAVARD, Jean, 64140 LONS (FR); NICOLEAU, Grégoire, 93400 SAINT-OUEN-SUR-SEINE (FR)
(74) Mandataire: Lavoix

(57) **Abrégé**

La présente invention concerne un véhicule ferroviaire (1) comprenant un dispositif de freinage électropneumatique (7) qui comprend au moins un frein pneumatique (9) ; une conduite principale (13) d'alimentation en air comprimé en liaison pneumatique avec l'au moins un frein pneumatique (9) ; un dispositif de commande (15) de l'au moins un frein pneumatique (9) couplé à une source principale (17) d'énergie électrique ; et un dispositif d'alimentation de secours (19) du dispositif de commande (15) qui comprend un dispositif (29) de conversion d'une puissance pneumatique en une puissance électrique de secours distribuée sur une sortie électrique (25) ; un moyen (46) de couplage du dispositif d'alimentation de secours (19) au dispositif de freinage (7) pour l'alimentation du dispositif de commande (15) soit depuis la sortie électrique (25) soit depuis la source principale (17) d'énergie électrique ; et un moyen (35) de couplage du dispositif d'alimentation de secours (19) pour son alimentation pneumatique depuis l'entrée pneumatique (23) à partir d'une source d'énergie pneumatique (37).

## Description

La présente invention concerne un véhicule ferroviaire du type comprenant une caisse portée par des roues et un dispositif de freinage électropneumatique du véhicule, le dispositif de freinage électropneumatique comprenant au moins un frein pneumatique, une conduite principale d'alimentation en air comprimé en liaison pneumatique avec l'au moins un frein pneumatique, et un dispositif de commande de l'au moins un frein pneumatique couplé à une source principale d'énergie électrique pour son alimentation.

Dans le domaine ferroviaire, de nombreux véhicules sont équipés d'un dispositif de freinage électropneumatique.

En particulier, les trains comprennent fréquemment un ensemble de freins pneumatiques reliés pneumatiquement à une conduite principale d'alimentation en air comprimé. Les freins pneumatiques sont commandés par un dispositif de commande électropneumatique alimenté électriquement.

Le dispositif de commande électropneumatique vise, entre autres, à obtenir la mise en action des différents freins pneumatiques du train sous l'action de la pression de l'air dans la conduite principale.

Le dispositif de commande électropneumatique requiert, pour son fonctionnement, une source d'énergie électrique constituée du réseau électrique interne du train, ce réseau constituant la source principale d'énergie électrique.

Lorsque la source principale d'énergie électrique est absente ou défaillante, le freinage d'urgence est déclenché, c'est-à-dire que les freins passent d'un état desserré à un état serré.

En cas de panne de la source principale d'énergie électrique, le train doit être secouru. Le train ne pourra alors se déplacer, ou être déplacé par un véhicule ferroviaire le secourant, que si ses freins pneumatiques sont à nouveau desserrés.

Certains trains comprennent à cette fin une batterie de secours qui peut être raccordée électriquement au dispositif de commande pour suppléer la source principale. Toutefois, la durée des opérations de secours peut être supérieure à la durée de décharge complète de la batterie. La batterie de secours, source transitoire d'énergie, n'est pas adaptée à de tels cas de figures.

D'autres trains permettent une alimentation électrique par un matériel secourant, mais les matériels secourant ne fonctionnent pas toujours à la même tension.

En outre, l'isolation mécanique complète des freins au niveau des bogies n'est pas toujours accessible et parfois non autorisée par la réglementation applicable.

Le document GB2448318A décrit un dispositif de secours portable qui permet de secourir un premier véhicule ferroviaire au moyen d'un second véhicule ferroviaire dont le dispositif de commande des freins est différent de celui du premier véhicule.

En particulier, le dispositif de secours portable permet d'obtenir le desserrage partiel ou complet des freins du second véhicule en assurant la conversion d'un signal de commande pneumatique transmis par le premier véhicule ferroviaire en un signal de commande électrique du second train.

La solution décrite par le document GB2448318A présente l'inconvénient de requérir, en sus de la connexion pneumatique, une connexion électrique entre le premier véhicule ferroviaire et le dispositif de secours.

Par ailleurs, elle nécessite une connaissance a priori de l'architecture de commande du premier et/ou du second véhicule, afin que la chaîne de conversion du signal soit adaptée au couple formé par le premier et le second véhicule.

Le but de l'invention est alors de proposer un véhicule ferroviaire comprenant un dispositif de freinage électropneumatique équipé d'un dispositif de secours, le dispositif de secours permettant de faire fonctionner le dispositif de freinage électropneumatique sans limite de durée au moyen d'un véhicule secourant, et ce avec une souplesse d'adaptation aussi grande que possible aux architectures particulières des véhicules secourant et à secourir.

A cet effet, l'invention a pour objet un véhicule du type précité comprenant en outre un dispositif d'alimentation de secours du dispositif de commande qui comprend :
un dispositif de conversion d'une puissance pneumatique reçue sur une entrée pneumatique en une puissance électrique de secours distribuée sur une sortie électrique,
un moyen de couplage du dispositif d'alimentation de secours au dispositif de freinage pour l'alimentation du dispositif de commande soit depuis la sortie électrique soit depuis la source principale d'énergie électrique, et
un moyen de couplage du dispositif d'alimentation de secours pour son alimentation pneumatique depuis l'entrée pneumatique à partir d'une source d'énergie pneumatique.

Le dispositif d'alimentation de secours permet de générer une puissance électrique sans limite de durée, par conversion d'une puissance pneumatique fournie par le véhicule secourant. Cette puissance électrique est utilisée pour alimenter en priorité le dispositif de commande des freins, ainsi que, si besoin, d'autres dispositifs électriques du véhicule à secourir.

Le dispositif d'alimentation de secours ne nécessite qu'un raccordement pneumatique vers le véhicule secourant. Les moyens permettant un tel raccordement sont prévus d'emblée, puisque le véhicule secourant comprend nécessairement une source d'énergie pneumatique pour alimenter la conduite principale du véhicule à secourir. Le dispositif de conversion ne nécessite donc aucune adaptation spécifique au véhicule secourant.

Le dispositif d'alimentation de secours selon l'invention ne requiert par ailleurs aucune connaissance a priori de l'architecture de commande du train à secourir ni de l'architecture de commande du train secourant, dans la mesure où le dispositif de commande est prévu pour fournir la puissance électrique nécessaire au bon fonctionnement du dipositif de commande plutôt que pour générer lui-même un signal de commande.

Suivant d'autres aspects avantageux de l'invention, le véhicule ferroviaire équipé d'un dispositif d'alimentation de secours comprend une ou plusieurs des caractéristiques suivantes, prises isolément ou suivant toutes les combinaisons techniquement possibles :
- le dispositif de conversion comprend un moteur à air comprimé couplé à un alternateur ;
- le dispositif d'alimentation de secours comprend un moyen de configuration d'une tension électrique en sortie du dispositif de conversion ;
- le dispositif d'alimentation de secours comprend un dispositif de configuration d'une pression d'air en entrée du dispositif de conversion ;
- le moyen de couplage à une source auxiliaire d'énergie pneumatique inclut une connexion à la conduite principale d'alimentation en air comprimé ;
- la sortie électrique inclut des moyens de couplage à un réseau électrique interne du véhicule ferroviaire ;
- le véhicule ferroviaire comprend au moins une batterie et le dispositif d'alimentation de secours comprend un dispositif de couplage de la sortie électrique avec l'au moins une batterie pour la charge de celle-ci ou pour l'alimentation de la sortie électrique au moyen de la batterie ;
- le véhicule ferroviaire comprend au moins un dispositif récepteur électrique additionnel et un dispositif de couplage subsidiaire du dispositif d'alimentation de secours à l'au moins un dispositif récepteur électrique additionnel pour son alimentation depuis la sortie électrique ;
- le dispositif d'alimentation de secours est configuré pour être déplaçable entre une position de rangement et au moins une position de secours relativement à la caisse du véhicule ferroviaire ;

L'invention concerne aussi un ensemble ferroviaire comprenant un véhicule ferroviaire à secourir selon l'un des modes de réalisation décrits plus haut et un véhicule ferroviaire secourant, le véhicule ferroviaire secourant comprenant une source auxiliaire d'énergie pneumatique couplée à l'entrée pneumatique du dispositif d'alimentation de secours du véhicule ferroviaire à secourir par l'intermédiaire du moyen de couplage pneumatique.

Selon un mode de réalisation particulier de l'ensemble ferroviaire, les véhicules ferroviaires secourant et à secourir ne sont pas couplés électriquement l'un à l'autre.

L'invention a également pour objet un ensemble ferroviaire formé par un véhicule ferroviaire comprenant un dispositif d'alimentation de secours du dispositif de commande du freinage électropneumatique et un véhicule secourant comprenant une source d'énergie pneumatique.

L'invention a enfin pour objet une méthode de secours d'un véhicule ferroviaire comprenant un dispositif d'alimentation de secours du dispositif de commande du freinage électropneumatique par un véhicule secourant comprenant une source d'énergie pneumatique, la méthode comprenant les étapes suivantes :
a) un couplage électrique du dispositif d'alimentation de secours au dispositif de freinage électropneumatique pour l'alimentation du dispositif de commande depuis la sortie électrique du dispositif d'alimentation de secours ; et
b) un couplage pneumatique d'une source auxiliaire d'énergie pneumatique comprise dans un véhicule ferroviaire secourant avec l'entrée pneumatique du dispositif d'alimentation de secours.

L'invention apparaîtra plus clairement à la lecture de la description qui va suivre, donnée uniquement à titre d'exemple non limitatif, et faite en référence aux dessins dans lesquels :
[Fig 1] la figure 1 est une représentation schématique d'un ensemble ferroviaire comprenant un véhicule secourant et un véhicule ferroviaire à secourir selon l'invention, et
[Fig 2] la figure 2 est une représentation détaillée d'un mode de réalisation d'un dispositif d'alimentation du dispositif de commande de freinage équipant le véhicule à secourir de la figure 1.

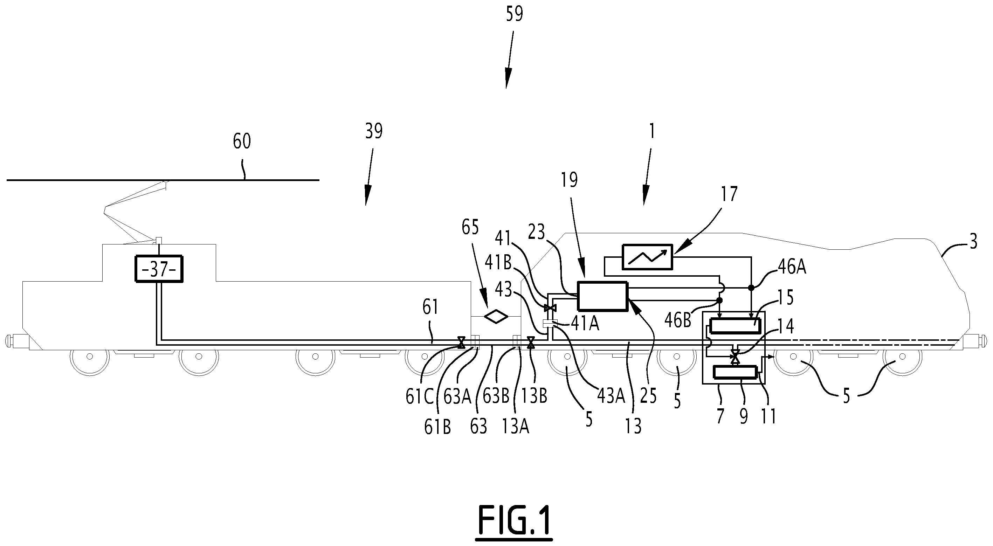

Le véhicule ferroviaire 1 illustré sur la figure 1 comprend une caisse 3 portée par des roues 5.

Le véhicule ferroviaire 1 comprend aussi un dispositif 7 de freinage électropneumatique, configuré pour permettre le ralentissement des roues 5, ainsi que l'immobilisation totale du véhicule ferroviaire 1.

A cette fin, le dispositif de freinage 7 comprend un frein pneumatique 9 propre à agir sur les roues 5, cette action étant symbolisée sur la figure 1 par la flèche d'action de freinage 11.

Le dispositif de freinage 7 comprend un circuit pneumatique configuré pour permettre au frein pneumatique 9 d'assurer la fonction de freinage du véhicule ferroviaire 1.

Le circuit pneumatique comprend une conduite principale 13 d'alimentation en air comprimé, à laquelle le frein pneumatique 9 est connecté pneumatiquement par l'intermédiaire d'une électrovanne 14.

Pour l'alimentation en air comprimé de la conduite principale 13, le véhicule ferroviaire 1 comprend des moyens de production d'air comprimé non représentés sur la figure 1, par exemple un compresseur.

Le dispositif de freinage 7 comprend aussi un dispositif 15 de commande du frein pneumatique 9 relié électriquement à l'électrovanne 14 pour son pilotage.

Le dispositif de commande 15 est donc apte à générer un signal de commande électrique de l'électrovanne 14.

Pour son fonctionnement normal, le dispositif de commande 15 est alimenté électriquement par une source principale d'énergie électrique 17, constituée du réseau électrique interne du véhicule ferroviaire 1 alimenté depuis une connexion à une caténaire ou un groupe électrogène.

Le dispositif de freinage 7 est en outre configuré pour que, si la source principale d'énergie électrique 17 est défaillante ou absente, un freinage dit d'urgence soit provoqué. Dans ce cas, le frein pneumatique 9 est serré, et il ne peut être à nouveau desserré que si un signal de commande d'ouverture est adressé à l'électrovanne 14 et que de l'air comprimé a cheminé vers le frein pneumatique 9 depuis la conduite principale 13.

Le véhicule ferroviaire 1 comprend en outre un dispositif d'alimentation de secours 19 du dispositif de commande 15.

Le dispositif d'alimentation de secours 19 comporte une entrée pneumatique 23 et une sortie électrique 25.

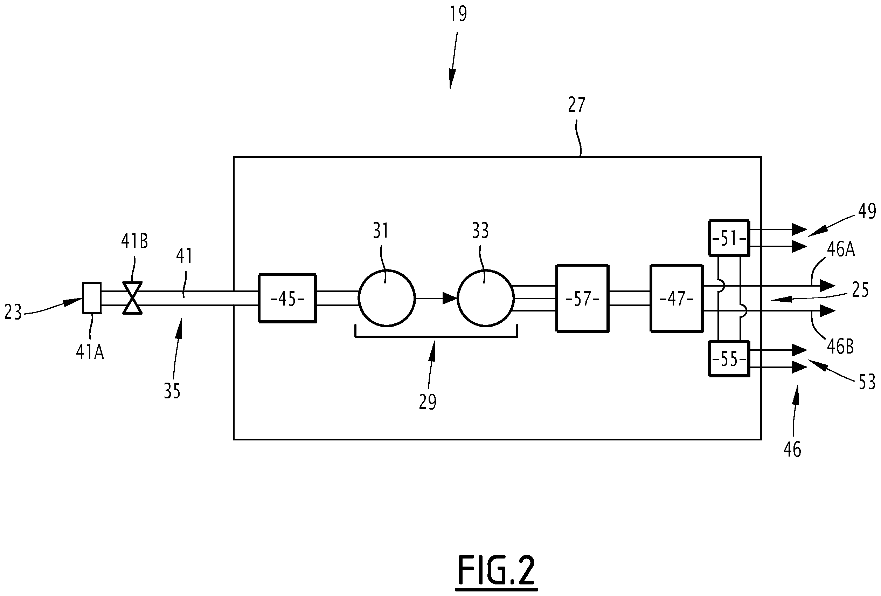

Le dispositif d'alimentation de secours 19 est représenté seul sur la figure 2.

Avantageusement, le dispositif d'alimentation de secours 19 comprend un boîtier 27 renfermant tous les éléments le constituant, et formant ainsi une valise mobile à l'intérieur du véhicule ferroviaire 1.

Le boîtier 27 est avantageusement rangé dans un espace dédié lorsqu'il n'est pas utilisé et amené à poste lorsqu'il doit être utilisé.

Le dispositif d'alimentation de secours 19 comprend un dispositif 29 de conversion d'une puissance pneumatique reçue sur l'entrée pneumatique 23 en une puissance électrique distribuée sur la sortie électrique 25.

Dans l'exemple, le dispositif de conversion 29 comprend un moteur à air comprimé 31 couplé à un alternateur 33.

Le dispositif d'alimentation de secours 19 comporte un moyen 35 de couplage pneumatique du dispositif d'alimentation de secours 19 à une source auxiliaire d'énergie pneumatique 37 pour son alimentation en air comprimé.

Dans l'exemple, la source auxiliaire d'énergie pneumatique 37 est externe au véhicule ferroviaire 1 et plus précisément, elle est comprise dans un deuxième véhicule ferroviaire 39, appelé dans la suite véhicule ferroviaire secourant 39.

Le moyen de couplage pneumatique 35 comprend une conduite auxiliaire 41 d'air comprimé. Une extrémité de la conduite auxiliaire 41 est reliée au dispositif de conversion 29 et une autre extrémité est munie d'un connecteur 41A pour la connexion à un piquage 43 prévu sur la conduite principale 13, laquelle est munie d'un connecteur 43A complémentaire du connecteur 41A.

La conduite auxiliaire 41 est avantageusement formée d'un tuyau souple et équipée d'un robinet d'arrêt 41B.

Avantageusement, le dispositif d'alimentation de secours 19 comprend un dispositif 45 de configuration d'une pression d'air en entrée du dispositif de conversion 29, de sorte que la pression de l'air reçu par le dispositif de conversion 29 est adaptée pour le fonctionnement des éléments qui constituent la chaîne de conversion d'énergie pneumatique.

Dans le cas de l'exemple de la figure 2, la pression de l'air en sortie du dispositif de configuration 45 est une pression nominale d'alimentation du moteur à air comprimé 31.

Le dispositif de configuration 45 comprend, à titre d'exemple, au moins un limiteur de pression pneumatique et optionnellement, un régulateur de débit pneumatique.

Le dispositif d'alimentation de secours 19 comprend par ailleurs un moyen 46 de couplage électrique adapté pour coupler le dispositif d'alimentation de secours 19 au dispositif de commande 15 pour l'alimentation électrique de ce dernier, soit depuis la source principale d'énergie électrique 17, soit depuis la sortie électrique 25.

A cette fin, le moyen de couplage électrique 46 comprend un câble de liaison muni à une extrémité de deux bornes électriques 46A, 46B et dont une autre extrémité est reliée à l'alternateur 33.

Les bornes électriques 46A, 46B sont aptes à être reliées aux bornes d'alimentation du dispositif de commande 15 et notamment au réseau électrique interne du véhicule ferroviaire 1.

Par exemple, les bornes électriques 46A, 46B sont celles d'un connecteur électrique, le réseau électrique interne du véhicule ferroviaire comprenant un connecteur électrique complémentaire pour l'alimentation du dispositif de commande 15 à partir de la sortie électrique 25.

Avantageusement, le moyen de couplage électrique 46 comprend aussi un dispositif de commutation électrique 47 adapté pour permettre l'alimentation électrique du dispositif de commande 15 soit depuis la source principale d'énergie électrique 17, soit depuis la sortie électrique 25.

Le dispositif de commutation électrique 47 comprend par exemple un ensemble d'interrupteurs manuels ou commandés électriquement.

De manière optionnelle, le dispositif d'alimentation de secours 19 comprend un dispositif de couplage complémentaire 49 de la sortie électrique 25 du dispositif d'alimentation de secours 19 avec au moins une batterie du véhicule ferroviaire 1, soit pour la charge de cette batterie, soit pour l'alimentation de la sortie électrique 25 au moyen de cette batterie.

Avantageusement, le dispositif d'alimentation de secours 19 comprend un dispositif de commutation complémentaire 51, manuel ou automatisé, configuré pour permettre la charge de la batterie à partir de dispositif d'alimentation de secours 19 et/ou pour permettre à la batterie de fournir de l'énergie électrique à un dispositif électrique récepteur du véhicule ferroviaire 1 couplé à la sortie électrique 25.

De manière optionnelle, le dispositif d'alimentation de secours 19 comprend un dispositif de couplage subsidiaire 53 de la sortie électrique 25 à au moins un dispositif récepteur électrique additionnel du véhicule ferroviaire 1 pour l'alimentation de ce dispositif récepteur électrique additionnel depuis la sortie électrique 25.

Le dispositif récepteur électrique additionnel peut être choisi parmi un haut-parleur, un dispositif d'éclairage électrique, une radio, ou tout autre équipement de secours nécessaire.

Avantageusement, le dispositif d'alimentation de secours 19 comprend un dispositif de commutation subsidiaire 55, manuel ou automatisé, propre à permettre l'alimentation du dispositif récepteur électrique additionnel soit depuis la sortie électrique 25, soit depuis la source principale d'énergie électrique 17.

Avantageusement, le dispositif d'alimentation de secours 19 comprend en outre un moyen 57 de configuration d'une tension électrique fournie sur la sortie électrique 25, comme cela est représenté sur la figure 2, de sorte qu'une tension électrique appliquée au dispositif de commande 15 et/ou à un autre récepteur électrique par l'intermédiaire de la sortie électrique 25 est une tension nominale d'alimentation du dispositif de commande 15 et/ou de cet autre récepteur électrique.

Le moyen de configuration 57 comprend, à titre d'exemple, un dispositif de conversion courant alternatif-courant continu (AC/DC) entre la sortie électrique de l'alternateur 33 et la sortie électrique 25, et optionnellement un dispositif de régulation de la tension en sortie du dispositif de conversion courant alternatif-courant continu.

Le véhicule ferroviaire 1 peut, notamment en cas de panne, être intégré dans un ensemble ferroviaire 59 selon l'invention.

L'ensemble ferroviaire 59 comprend, outre le véhicule ferroviaire 1, le véhicule ferroviaire secourant 39 équipé de la source d'énergie pneumatique 37, par exemple un compresseur alimenté électriquement au moyen d'un circuit électrique le reliant par exemple à une caténaire 60.

Le véhicule ferroviaire secourant 39 comprend une conduite d'air 61 dont une extrémité est reliée à la source d'énergie pneumatique 37 et une autre extrémité est munie d'un connecteur additionnel 61B, avantageusement précédé d'un robinet d'arrêt 61C.

Avantageusement, le connecteur 61B est placé sur une surface extérieure du véhicule secourant 39.

Le véhicule ferroviaire 1 et le véhicule ferroviaire secourant 39 sont couplés pneumatiquement par l'intermédiaire d'une conduite d'air intermédiaire 63 dont une extrémité est munie d'un premier connecteur 63A complémentaire du connecteur additionnel 61B et une autre extrémité est munie d'un second connecteur 63B.

Une extrémité de la conduite d'air principale 13 est équipée d'un connecteur principal 13A complémentaire du second connecteur 63B, avantageusement précédé d'un robinet d'arrêt 13B.

Avantageusement, le connecteur principal 13A est placé sur la caisse 3 du véhicule ferroviaire 1.

On décrit dans la suite une méthode de secours d'un véhicule ferroviaire 1 selon l'invention au moyen du véhicule ferroviaire secourant 39.

Avant la mise en oeuvre de la méthode de secours, le véhicule ferroviaire 1 a été immobilisé suite à un signal de commande de freinage d'urgence. Le véhicule ferroviaire 1 est dans un état dans lequel aucun moyen du véhicule ferroviaire 1 ne permet d'alimenter électriquement le dispositif de commande 15 de manière illimitée dans le temps. Le secours du véhicule ferroviaire 1 a été en conséquence requis automatiquement ou par un opérateur.

Pour ce secours, le véhicule ferroviaire secourant 39 a été placé à proximité du véhicule ferroviaire 1 à secourir. Une opération de couplage mécanique est réalisée via un coupleur 65.

Dans une étape de couplage électrique, le dispositif d'alimentation de secours 19 est couplé électriquement au dispositif de commande 15.

Pour cela, le boîtier 27 est déplacé de son lieu de rangement vers son lieu de mise en oeuvre. Puis les bornes électriques 46A et 46B sont raccordées au réseau électrique interne du véhicule ferroviaire 1, de façon à ce que le dispositif de commande 15 du véhicule ferroviaire 1 puisse être alimenté depuis la sortie électrique 25 du dispositif d'alimentation de secours 19.

Avantageusement, l'état du dispositif de commutation électrique 47 est modifié pour permettre l'alimentation du dispositif de commande 15 du véhicule ferroviaire 1 depuis la sortie électrique 25 du dispositif d'alimentation de secours 19.

Dans une étape de couplage pneumatique, l'entrée pneumatique 23 du dispositif d'alimentation de secours 19 est couplée à la source d'énergie pneumatique 37 par l'intermédiaire du moyen de couplage pneumatique 35.

Dans l'exemple de la figure 1, le couplage pneumatique comprend le déploiement de la conduite auxiliaire 41 hors du boîtier 27 et la connexion du connecteur 41A au connecteur 43A complémentaire.

L'étape de couplage pneumatique comprend aussi le déploiement de la conduite intermédiaire 63 entre le véhicule ferroviaire 1 à secourir et le véhicule ferroviaire secourant 39, ainsi que la connexion du premier connecteur 63A avec le connecteur additionnel 61B, et la connexion du second connecteur 63B avec le connecteur principal 13A complémentaire.

Enfin, l'étape de couplage pneumatique comprend l'ouverture des robinets d'arrêt 41B, 13B et61C.

L'étape de couplage électrique et l'étape de couplage pneumatique peuvent être exécutées simultanément ou successivement dans un ordre quelconque.

Une fois les étapes de couplage mécanique, pneumatique et électrique effectuées, une ou plusieurs étapes de secours ultérieures peuvent être mises en oeuvre sur l'ensemble ferroviaire 59.

Notamment, une étape de desserrage du frein pneumatique 9 peut être réalisée.

Pour cela, de l'énergie pneumatique est effectivement transférée du véhicule secourant 39 au dispositif d'alimentation de secours 19 du véhicule ferroviaire 1 à secourir. Le dispositif d'alimentation de secours 19 convertit cette énergie pneumatique en une énergie électrique qu'il fournit au dispositif de commande 15.

Un signal de commande peut alors être transmis par le dispositif de commande 15 à l'électrovanne 14, provoquant le desserrage de l'au moins un frein pneumatique 9. Le signal de commande est transmis par le dispositif de commande 15 lorsque l'opération de secours le nécessite, suivant la logique du dispositif de commande 15 et selon le souhait des opérateurs.

L'étape de desserrage rend possible une étape de secours ultérieure de déplacement du véhicule ferroviaire 1 à secourir. De plus, le dispositif de commande 15 étant correctement alimenté électriquement par le dispositif de secours 19 via la sortie électrique 25, le dispositif de freinage électropneumatique 7 pourra être utilisé sans limite de temps pendant les opérations de secours.

La méthode de secours comprend avantageusement une étape de couplage mécanique du véhicule ferroviaire 1 à secourir avec le véhicule ferroviaire secourant 39 avant l'étape de secours de déplacement.

Une étape de secours ultérieure est optionnellement une étape de recharge d'une batterie du véhicule ferroviaire 1 par le dispositif de secours 19.

L'étape de recharge comprend le raccordement d'une batterie du véhicule ferroviaire 1 à la sortie électrique 25 par l'intermédiaire du dispositif de couplage complémentaire 49 et le cas échéant la commutation du dispositif de commutation complémentaire 51.

Une étape de secours ultérieure est optionnellement une étape d'alimentation d'un dispositif récepteur électrique additionnel du véhicule ferroviaire 1. Cette étape comprend le raccordement du dispositif récepteur électrique additionnel du véhicule ferroviaire 1 à la sortie électrique 25 par l'intermédiaire du dispositif de couplage subsidiaire 53 ainsi que la commutation du dispositif de commutation subsidiaire 55.

Les différentes étapes de secours ultérieures peuvent être exécutées simultanément ou successivement, et de manière itérative ou non.

Dans un mode de réalisation particulier, des priorités sont affectées aux différentes étapes. Par exemple, l'étape de recharge et/ou l'étape d'alimentation d'un dispositif récepteur électrique additionnel ne sont mises en oeuvre que si le dispositif de commande 15 reçoit une énergie électrique suffisante pour son fonctionnement.

En variante, l'étape de couplage électrique comprend alors uniquement la commutation du dispositif de commutation électrique 47, la sortie électrique 25 étant alors couplée électriquement au réseau électrique interne du véhicule ferroviaire 1 de manière permanente.

En variante, l'étape de couplage pneumatique comprend la connexion du connecteur 41A avec le connecteur additionnel 61B, qui est dans ce cas complémentaire du connecteur 41A.

Le dispositif d'alimentation de secours 25 présente l'avantage de permettre le secours du véhicule ferroviaire 1 dans lequel il est monté avec une grande variété de véhicules ferroviaires secourants 39, pourvu que ces derniers comprennent une source d'énergie pneumatique 37.

Notamment, le secours ne nécessite qu'une connexion pneumatique entre l'entrée pneumatique 23 du dispositif d'alimentation de secours 19 et le véhicule ferroviaire secourant 39, ainsi qu'une connexion électrique entre le dispositif de commande 15 et la sortie électrique 25 du dispositif d'alimentation de secours 19.

Aucun autre prérequis, donc aucune autre adaptation préalable n'est nécessaire. En particulier, aucune connexion électrique spécifique entre les deux véhicules ferroviaires n'est nécessaire.

Les opérations de secours ne nécessitent que très peu de manipulations pour les couplages de l'entrée pneumatique 23 et de la sortie électrique 25, qui peuvent par exemple être effectuées au moyen de raccords pneumatiques et/ou électriques rapides et de dispositifs de commutation pneumatiques et/ou électriques simples, commandés manuellement ou automatiquement.

Le dispositif d'alimentation de secours 19 permet de reprendre le contrôle du dispositif de commande 15, et donc du dispositif de freinage électropneumatique 7 dans son ensemble, sans limite de durée, tant que la source d'énergie pneumatique du véhicule ferroviaire secourant 39 est disponible. Le dispositif de freinage électropneumatique 7 est donc contrôlable notamment pendant le déplacement du véhicule ferroviaire 1 à secourir.

L'énergie pneumatique à prélever au véhicule ferroviaire secourant 39 pour le fonctionnement du dispositif d'alimentation de secours 19 et pour l'alimentation pneumatique de la conduite d'air principale 13 est en général très inférieure à celle qui est produite par la source d'énergie pneumatique 37.

Il est aussi possible d'envisager l'alimentation électrique d'une batterie et/ou d'un ou plusieurs dispositifs récepteurs électriques additionnels du véhicule ferroviaire 1 à secourir via la sortie électrique 25, tant que l'énergie pneumatique à prélever au véhicule ferroviaire secourant 39 pour le fonctionnement du dispositif d'alimentation de secours 19 reste acceptable. La conversion d'énergie pneumatique en énergie électrique par l'intermédiaire du dispositif d'alimentation de secours 19 permet donc le fonctionnement de dispositifs récepteurs électriques présents dans le véhicule ferroviaire 1 à secourir en plus grand nombre que si une simple batterie de secours était utilisée. Cette disposition est particulièrement utile dans le cas où des passagers sont présents dans le véhicule ferroviaire 1 à secourir.

## Revendications

1. Véhicule ferroviaire (1) comprenant une caisse (3) portée par des roues (5) et un dispositif de freinage électropneumatique (7) du véhicule,
le dispositif de freinage électropneumatique (7) comprenant :
- au moins un frein pneumatique (9),
- une conduite principale (13) d'alimentation en air comprimé en liaison pneumatique avec l'au moins un frein pneumatique (9),
- un dispositif de commande (15) de l'au moins un frein pneumatique (9) couplé à une source principale (17) d'énergie électrique pour son alimentation,
le véhicule ferroviaire (1) étant **caractérisé en ce qu'**il comprend en outre un dispositif d'alimentation de secours (19) du dispositif de commande (15) qui comprend :
- un dispositif (29) de conversion d'une puissance pneumatique reçue sur une entrée pneumatique (23) en une puissance électrique de secours distribuée sur une sortie électrique (25),
- un moyen (46) de couplage du dispositif d'alimentation de secours (19) au dispositif de freinage (7) pour l'alimentation du dispositif de commande (15) soit depuis la sortie électrique (25) soit depuis la source principale (17) d'énergie électrique, et
- un moyen (35) de couplage du dispositif d'alimentation de secours (19) pour son alimentation pneumatique depuis l'entrée pneumatique (23) à partir d'une source d'énergie pneumatique (37).

2. Véhicule ferroviaire (1) selon la revendication 1 dans lequel le dispositif de conversion (29) comprend un moteur à air comprimé (31) couplé à un alternateur (33).

3. Véhicule ferroviaire (1) suivant l'une quelconque des revendications précédentes dans lequel le dispositif d'alimentation de secours (19) comprend un moyen (57) de configuration d'une tension électrique en sortie du dispositif de conversion (29).

4. Véhicule ferroviaire (1) suivant l'une quelconque des revendications précédentes dans lequel le dispositif d'alimentation de secours (19) comprend un dispositif (45) de configuration d'une pression d'air en entrée du dispositif de conversion (29).

5. Véhicule ferroviaire (1) selon l'une quelconque des revendications précédentes dans lequel le moyen (35) de couplage à une source auxiliaire d'énergie pneumatique (37) inclut une connexion à la conduite principale (13) d'alimentation en air comprimé.

6. Véhicule ferroviaire (1) selon l'une quelconque des revendications précédentes dans lequel la sortie électrique (25) inclut des moyens (46) de couplage à un réseau électrique interne du véhicule ferroviaire (1).

7. Véhicule ferroviaire (1) suivant l'une quelconque des revendications précédentes comprenant en autre au moins une batterie et dans lequel le dispositif d'alimentation de secours (19) comprend un dispositif (49) de couplage de la sortie électrique (25) avec l'au moins une batterie pour la charge de celle-ci ou pour l'alimentation de la sortie électrique (25) au moyen de la batterie.

8. Véhicule ferroviaire (1) suivant l'une quelconque des revendications précédentes comprenant au moins un dispositif récepteur électrique additionnel et un dispositif (53) de couplage subsidiaire du dispositif d'alimentation de secours (19) à l'au moins un dispositif récepteur électrique additionnel pour son alimentation depuis la sortie électrique (25).

9. Véhicule ferroviaire (1) suivant l'une quelconque des revendications précédentes dans lequel le dispositif d'alimentation de secours (19) est configuré pour être déplaçable entre une position de rangement et au moins une position de secours relativement à la caisse (3) du véhicule ferroviaire (1).

10. Ensemble ferroviaire (59) comprenant un véhicule ferroviaire (1) à secourir suivant l'une quelconque des revendications précédentes et un véhicule ferroviaire secourant (39), le véhicule ferroviaire secourant (39) comprenant une source auxiliaire d'énergie pneumatique (37) couplée à l'entrée pneumatique (23) du dispositif d'alimentation de secours (19) du véhicule ferroviaire (1) à secourir par l'intermédiaire du moyen de couplage pneumatique (35).

11. Ensemble ferroviaire (59) suivant la revendication 10 dans lequel les véhicules ferroviaires secourant (39) et à secourir (1) ne sont pas couplés électriquement l'un à l'autre.

12. Méthode de secours d'un véhicule ferroviaire (1) à secourir, le véhicule ferroviaire (1) étant suivant l'une quelconque des revendications 1 à 9, la méthode comprenant les étapes suivantes :
a. un couplage électrique du dispositif d'alimentation de secours (19) au dispositif de freinage électropneumatique (7) pour l'alimentation du dispositif de commande (15) depuis la sortie électrique (25) du dispositif d'alimentation de secours (19) ; et
b. un couplage pneumatique d'une source auxiliaire d'énergie pneumatique (37) comprise dans un véhicule ferroviaire secourant (39) avec l'entrée pneumatique (23) du dispositif d'alimentation de secours (19).
